# EUROPÄISCHE PATENTSCHRIFT

(11) **EP 4 208 498 B1**
(45) Veröffentlichungstag und Bekanntmachung des Hinweises auf die Patenterteilung: **13.08.2025**
(21) Anmeldenummer: 21769983.4
(22) Anmeldetag: 31.08.2021
(51) Int. Cl.: C08G 59/50, C09D 163/00, C08K 3/04

(54) **ELEKTRISCH LEITENDE EPOXIDHARZ-BESCHICHTUNG UND ELEKTRO-STATISCH ABLEITFÄHIGER BODEN**
ELECTRICALLY CONDUCTIVE EPOXY RESIN COATING AND ELECTROSTATICALLY CONDUCTIVE BASE
REVÊTEMENT ÉLECTROCONDUCTEUR EN RÉSINE ÉPOXYDE ET SOL ANTISTATIQUE

(30) Priorität: 01.09.2020 EP 20193948
(43) Veröffentlichungstag der Anmeldung: 12.07.2023
(73) Patentinhaber: Sika Technology AG, 6340 Baar (CH)
(72) Erfinder: GRÖTZINGER, Jochen, 73525 Schwäbisch Gmünd (DE); VON DER BRÜGGEN, Uwe, 74909 Meckesheim (DE); SARIOGLU, Oguz, 74080 Heilbronn (DE); KASEMI, Edis, 8046 Zürich (CH)
(74) Vertreter: Sika Patent Attorneys
(86) Internationale Anmeldenummer: PCT/EP2021/074014
(87) Internationale Veröffentlichungsnummer: WO 2022/049070

(56) Entgegenhaltungen:
- EP-A1- 3 344 677
- EP-B1- 3 344 677
- DE-A1- 102018 009 794

## Beschreibung

### Technisches Gebiet

Die Erfindung betrifft elektrisch leitende Epoxidharz-Beschichtungen und ihre Verwendung in elektrostatisch ableitfähigen Fussböden.

### Stand der Technik

Elektrostatisch ableitfähige Böden, auch ESD-Böden (für "electrostatic dissipative") genannt, sind bekannt. Sie dienen dazu, elektrostatische Ladungen, die in einem Raum beispielsweise durch Begehen oder Befahren entstehen, über das Schuhwerk und den Boden an eine Erdung abzuleiten. Dadurch werden spontane elektrostatische Entladungen vermieden, die in der Produktion oder Handhabung von empfindlichen Produkten oder Instrumenten zu Defekten oder Störungen führen können.

Ein elektrostatisch ableitfähiger Boden muss gegen die Erde einen so geringen elektrischen Widerstand aufweisen, dass Ladungen zuverlässig abgeleitet werden, aber dabei nur so stark ableitend sein, dass Personen bei Kontakt mit elektrischem Strom in ihrer Gesundheit nicht gefährdet sind. Für solche Böden gibt es Normen, in denen Prüfverfahren für das elektrostatische bzw. elektrische Verhalten beschrieben sind. Die DIN EN 61340-4-1 beispielsweise beschreibt ein Prüfverfahren zur Bestimmung des elektrischen Widerstandes von Bodenbelägen und verlegten Fussböden, und in der DIN EN 61340-4-5 wird die elektrostatische Sicherheit hinsichtlich des elektrischen Widerstandes und der Aufladbarkeit von Personen, Schuhwerk und Bodenbelägen in Kombination bewertet.

Böden auf Epoxidharz-Basis sind besonders robust in Bezug auf mechanische Beanspruchung und Beständigkeit gegenüber vielen Substanzen. Sie sind deshalb besonders geeignet für stark beanspruchte industrielle Produktionsräume. Ein elektrostatisch ableitfähiges Bodensystem auf Epoxidharz-Basis muss eine Reihe von Eigenschaften erfüllen. Es soll auf unterschiedlichen Substraten eine zuverlässige Haftung aufbauen und mit möglichst wenig Aufwand einbaubar sein. Die durch den Boden aufgenommenen elektrostatischen Ladungen sollen zuverlässig nach unten abgeleitet werden. Dazu wird unter der Beschichtung ein sogenanntes Leitsystem mit Kupferbändern oder -drähten verlegt, die an eine Erdung angeschlossen sind. Die Epoxidharz-Beschichtung soll gut einbaubar und kompatibel mit dem darunterliegenden Leitsystem sein und und nach der Aushärtung über eine ästhetisch schöne, ebenmässige Oberfläche mit hoher Härte bei geringer Sprödigkeit verfügen. Dazu soll die Epoxidharz-Beschichtung bei Umgebungstemperaturen über eine niedrige Viskosität mit gutem Verlauf und guter Entlüftung verfügen und eine lange Offenzeit aufweisen, aber dennoch möglichst rasch aushärten und keine Aushärtungsstörungen wie Restklebrigkeit, Flecken oder Trübungen ausbilden. Für eine hohe Rutschfestigkeit kann an der Oberfläche ein Sand eingestreut sein, der mit einer Versiegelung überschichtet ist. Nach der Aushärtung soll der beschichtete Boden einen elektrischen Widerstand im Bereich von etwa 10⁵ bis 10⁸ Ohm aufweisen und robust und belastbar sein.

Böden, die aus Kunstharzen wie Epoxidharzen hergestellt sind, sind Isolatoren. Um elektrische Leitfähigkeit zu erreichen gibt es verschiedene Möglichkeiten. Bekannt ist der Einsatz ionischer Flüssigkeiten oder in der Kunstharz-Matrix löslicher organischer Salze, die eine elektrische Leitfähigkeit bereitstellen. Dabei wird aber die Aushärtung verlangsamt und die mechanische und chemische Widerstandsfähigkeit des Bodens massiv reduziert, und der elektrische Widerstand ist stark abhängig von der herrschenden Luftfeuchtigkeit. Weiter können leitfähige feste Teilchen zugegeben werden. Dafür eigenen sich zum Beispiel Metalle, wobei diese eine starke Eigenfarbe haben und aufgrund ihres hohen spezifischen Gewichts während der Lagerung der noch flüssigen Zusammensetzung so stark am Boden des Gebindes absetzen, dass ein homogenes Aufrühren und Verteilen in der Beschichtung schwierig ist. Dies führt zu einem uneinheitlichen elektrischen Widerstand und Zonen mit zu geringer Leitfähigkeit. Weiter bekannt ist die Zugabe von leitendem Russ oder Graphit, wodurch zwar eine zuverlässige Leitfähigkeit erreicht wird, aber aufgrund der starken Schwarzfärbung dieser Stoffe nur sehr dunkle bis schwarze Beschichtungen erhalten werden, was für einen Industrieboden meist nicht erwünscht ist. Weiter bekannt sind feine Fasern aus Kohlenstoff, sogenannte Carbonfasern. Diese bereiten aber ebenfalls Schwierigkeiten beim homogenen Einmischen und neigen zum Akkumulieren, was nach der Aushärtung sichtbar bleibt und zu unschönen Oberflächen mit uneinheitlichem Widerstand führt. Seit neuerem bekannt sind sogenannte Carbon Nanotubes (CNT), welche auch als leitende Füllstoffe einsetzbar sind. Dabei handelt es sich um Nanoröhren aus Kohlenstoff, deren Wand aus einzelnen Graphit-Schichten, sogenannten Graphenen, besteht. Carbon Nanotubes ermöglichen bereits bei einer sehr geringen Einsatzmenge eine gute Leitfähigkeit mit einem einheitlichen Widerstand über eine grosse Fläche, weitgehend unabhängig von der Luftfeuchtigkeit. Aufgrund ihrer hohen Oberfläche haben sie aber eine stark verdickende Wirkung. Dadurch entsteht bei der Applikation ein schlechter Verlauf und das Entlüften durch Entweichen von eingeschlossener Luft in Form von aufsteigenden, an der Oberfläche zerplatzenden Luftbläschen ist erschwert. Eine elektrisch leitfähige Beschichtung auf der Basis von Carbon Nanotubes braucht deshalb mehr Sorgfalt und Zeit bei der Applikation und zeigt nach der Aushärtung eine leicht unebene Oberfläche aufgrund der unvollständigen Entlüftung. Elektrostatisch ableitfähige Böden auf Epoxidharz-Basis sind beispielsweise beschrieben in EP 1,437,182, wo Carbonfasern als leitende Füllstoffe eingesetzt werden.

Amine der Formel (I) als Härter für Epoxidharze sind beispielsweise beschrieben in EP 3,180,383 oder EP 3,344,677.

DE102018009794 A1 offenbart eine Beschichtungszusammensetzung enthaltend einen Aminhärter, Carbon-Nanotubes und Epoxidharze A und F.

### Darstellung der Erfindung

Aufgabe der vorliegenden Erfindung ist es daher, eine elektrisch leitende Epoxidharz-Beschichtung mit einem von der Luftfeuchtigkeit weitgehend unabhängigen elektrischen Widerstand zur Verfügung zu stellen, welche bei der Verarbeitung auch ohne oder mit nur wenig nicht einbaubaren Verdünnern einen guten Verlauf mit guter Entlüftung zeigt, schnell aushärtet und schliesslich über eine ebenmässige, ästhetisch schöne Oberfläche verfügt und geeignet ist als Bestandteil eines elektrostatisch ableitfähigen Bodensystems.

Überraschenderweise löst die Verwendung einer Kombination aus Carbon Nanotubes und mindestens einem Amin der Formel (I) gemäss Anspruch 1 diese Aufgabe. Epoxidharz-Beschichtungen mit Carbon Nanotubes verfügen zwar über eine zuverlässige elektrische Leitfähigkeit mit einem weitgehend von der Luftfeuchtigkeit unabhängigen elektrischen Widerstand. Durch die ultrafeinen Carbon Nanotubes ist der Verlauf und die Entlüftung aber erheblich erschwert. Vor allem bei gefüllten, pigmentierten Beschichtungen ist die Entlüftung so stark erschwert, dass auch nach dem Behandeln der noch flüssigen Beschichtung mit einer Stachelwalze oder Stachelschuhen eine leicht unebene Oberfläche mit nicht aufgeplatzten feinen Bläschen entsteht. Die Kombination mit dem Amin der Formel (I) ermöglicht überraschenderweise einen deutlich verbesserten Verlauf und eine stark verbesserte Entlüftung, wodurch die Verarbeitung erleichtert ist und eine schöne, besonders ebenmässige Oberfläche entsteht. Die erfindungsgemässe Verwendung ermöglicht pigmentierte Beschichtungen von hoher Farbintensität, sowie transparente Beschichtungen, bei welchen das Amin der Formel (I) überraschenderweise eine besonders hohe Transparenz ermöglicht. Die ausgehärteten Beschichtungen aus der erfindungsgemässen Verwendung verfügen über eine ästhetisch schöne, ebenmässige Oberfläche, eine hohe Härte bei wenig Sprödigkeit, eine hohe Robustheit gegenüber mechanischer und chemischer Beanspruchung und eine gleichmässig über die Oberfläche verteilte elektrische Leitfähigkeit, weitgehend unabhängig von der Luftfeuchtigkeit. Die erfindungsgemässe Verwendung ermöglicht insbesondere auch elektrisch leitfähige Beschichtungen mit besonders niedriger Emission von organischen Substanzen nach der Aushärtung, welche geeignet sind für den Einsatz in Spitälern oder Reinräumen.

Die Epoxidharz-Beschichtung aus der erfindungsgemässen Verwendung ermöglicht ein elektrostatisch ableitfähiges Bodensystem, welches gut und einfach einbaubar ist, besonders wenig Emissionen verursacht und höchsten ästhetischen Ansprüchen genügt. Es ermöglicht Bodensysteme mit farbigen, besonders ebenmässigen Oberflächen und Bodensysteme mit einer rutschfesten, transparent versiegelten, mit Sand abgestreuten Oberfläche.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung einer Kombination von Carbon Nanotubes und mindestens einem Amin der Formel (I),

Z-NH-A-NH-CH₂-Y (I)

wobei
A für einen zweiwertigen C₂ bis C₁₅ Alkylen-, Cycloalkylen- oder Arylalkylen-Rest, welcher gegebenenfalls ein oder mehrere Stickstoffatome oder Ethergruppen enthält, steht, und
Z für H oder ---CH₂-Y steht, und
Y für H oder einen C₁ bis C₁₂ Alkyl-, Cycloalkyl-, Arylalkyl- oder Aryl-Rest steht,
wobei das Amin der Formel (I) insgesamt mindestens 8 C-Atome enthält, zur Herstellung einer elektrisch leitenden Epoxidharz-Beschichtung.

Als "Carbon Nanotubes" werden Kohlenstoff-Röhren mit einem Durchmesser im Nanometer-Bereich, insbesondere im Bereich von 1 bis 50 nm, und einer Wand aus einer oder mehreren Lagen Graphen, also Kohlenstoff mit ringförmig angeordneten Kohlenstoffatomen, bezeichnet.

Als "lagerstabil" wird eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Verdünner" wird eine in einem Epoxidharz lösliche und dessen Viskosität senkende Substanz bezeichnet, welche bei der Aushärtung chemisch nicht in das Epoxidharz-Polymer eingebunden wird.

Als "Epoxid-Flüssigharz" wird ein technisches Polyepoxid mit einer Glasübergangstemperatur unterhalb von 25°C bezeichnet.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet. Es wird mittels Gelpermeationschromatographie (GPC) gegen Polystyrol als Standard bestimmt.

Als "Topfzeit" wird die Zeitspanne ab dem Mischen der Komponenten einer Epoxidharz-Zusammensetzung bezeichnet, innerhalb welcher die Zusammensetzung ohne Einbussen verarbeitet werden kann.

Als "Gelierzeit" wird die Zeitspanne ab dem Mischen der Komponenten einer Epoxidharz-Zusammensetzung bis zu deren Gelieren bezeichnet.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Aminogruppen bezeichnet.

Als "aliphatisch" werden Aminwasserstoffe von Aminogruppen, die an ein aliphatisches C-Atom gebunden sind, bezeichnet.

Als "Aminwasserstoff-Equivalentgewicht" wird die Masse eines Amins oder einer Amin-haltigen Zusammensetzung, die ein Mol-Equivalent Aminwasserstoff enthält, bezeichnet.

Mit "Poly" beginnende Substanznamen wie Polyamin oder Polyepoxid bezeichnen Substanzen, die formal zwei oder mehr der in ihrem Namen vorkommenden funktionellen Gruppen pro Molekül enthalten.

Als "Raumtemperatur" wird eine Temperatur von 23 °C bezeichnet. Gewichtsprozente (Gewichts-%), abgekürzt Gew.-%, bezeichnen Massenanteile eines Bestandteils einer Zusammensetzung oder eines Moleküls, bezogen auf die gesamte Zusammensetzung oder das gesamte Molekül, falls nichts anderes ange-ben. Die Begriffe "Masse" und "Gewicht" werden im vorliegenden Dokument synonym benutzt.

Alle im Dokument erwähnten Industriestandards und Normen beziehen sich auf die zum Zeitpunkt der Einreichung der Erstanmeldung gültigen Fassungen.

Carbon Nanotubes werden industriell hergestellt und in verschiedenen Qualitäten kommerziell angeboten. Sie weisen interessante Eigenschaften für unterschiedliche Einsatzbereiche auf. Insbesondere sind sie elektrisch leitfähig.

Als Carbon Nanotubes geeignet sind insbesondere einwandige Carbon Nanotubes, sogenannte "single wall carbon nanotubes".

Bevorzugt werden sie verwendet als Dispersion in einem flüssigen Trägermaterial, insbesondere in einer Flüssigkeit, welche gut kompatibel mit EpoxidharzZusammensetzungen ist, insbesondere einem Alkylglycidylether, einem Fettsäureester oder einem ethoxylierten Alkohol.

Bevorzugt ist eine Dispersion mit 10 Gewichts-% Carbon Nanotubes, insbesondere in einem Alkylglycidylether, insbesondere einem C₁₂ bis C₁₄ Alkylglycidylether, wie er auch als Reaktivverdünner für Epoxidharze verwendet wird. Eine solche Dispersion ist kommerziell erhältlich, beispielsweise als Tuball^{®} Matrix 207 (von OCSiAl).

Bereits eine gewichtsmässig sehr kleine Menge an Carbon Nanotubes ermöglicht eine gute elektrische Leitfähigkeit, bewirkt aber auch eine deutliche Erhöhung der Viskosität und Verlaufseigenschaften und eine gewisse Dunkelfärbung der Beschichtung.

Bevorzugt werden die Carbon Nanotubes in einer solchen Menge verwendet, dass die Epoxidharz-Beschichtung hell genug ist, um als pigmentierte, farbige Beschichtung in hellen Farbtönen oder als transparente Versiegelung einsetzbar zu sein.

Bevorzugt ist eine Menge im Bereich von 0.001 bis 0.1 Gewichts-% bezogen auf die gesamte Epoxidharz-Beschichtung.

Besonders bevorzugt ist eine Menge im Bereich von 0.001 bis 0.05 Gewichts-% bezogen auf die gesamte Epoxidharz-Beschichtung.

Somit wird eine Dispersion mit 10 Gewichts-% Carbon Nanotubes bevorzugt in einer Menge im Bereich von 0.01 bis 1 Gewichts-%, insbesondere 0.01 bis 0.5 Gewichts-%, bezogen auf die gesamte Epoxidharz-Beschichtung eingesetzt.

In diesem Bereich wird die gewünschte elektrische Leitfähigkeit und eine nicht zu starke Dunkelfärbung erreicht.

Eine pigmentierte Beschichtung enthält bevorzugt eine Menge im Bereich von 0.01 bis 0.1 Gewichts-%, insbesondere 0.01 bis 0.05 Gewichts-%.

Eine transparente Beschichtung enthält bevorzugt eine Menge im Bereich von 0.001 bis 0.01 Gewichts-%, insbesondere 0.001 bis 0.005 Gewichts-%.

Im Amin der Formel (I) ist A bevorzugt ausgewählt aus der Gruppe bestehend aus 1,2-Ethylen, 1,2-Propylen, 1,3-Propylen, 1,4-Butylen, 1,3-Butylen, 2-Methyl-1,2-propylen, 1,3-Pentylen, 1,5-Pentylen, 2,2-Dimethyl-1,3-propylen, 1,6-Hexylen, 2-Methyl-1,5-pentylen, 1,7-Heptylen, 1,8-Octylen, 2,5-Dimethyl-1,6-hexylen, 1,9-Nonylene, 2,2(4),4-Trimethyl-1,6-hexylen, 1,10-Decylen, 1,11-Undecylen, 2-Butyl-2-ethyl-1,5-pentylen, 1,12-Dodecylen, 1,2-Cyclohexylen, 1,3-Cyclohexylen, 1,4-Cyclohexylen, (1,5,5-Trimethylcyclohexan-1-yl)methan-1,3, 4(2)-Methyl-1,3-cyclohexylen, 1,3-Cyclohexylen-bis(methylen), 1,4-Cyclohexylen-bis(methylen), 1,3-Phenylen-bis(methylen), 1,4-Phenylen-bis(methylen), 3-Oxa-1,5-pentylen, 3,6-Dioxa-1,8-octylen, 4,7-Dioxa-1,10-decylen, 3-Aza-1,5-pentylen, 3,6-Diaza-1,8-octylen, 4,7-Diaza-1,11-decylen und 3-Aza-1,6-hexylen.

Bevorzugt ist A frei von Stickstoffatomen und frei von Ethergruppen.

Bevorzugt steht A für einen C₂ bis C₈ Alkylen-Rest, insbesondere für 1,2-Ethylen, 1,2-Propylen, 1,3-Propylen, 1,4-Butylen, 1,3-Butylen, 1,5-Pentylen, 1,6-Hexylen, 2-Methyl-1,5-pentylen, 1,7-Heptylen oder 1,8-Octylen. Diese Amine der Formel (I) ermöglichen besonders gute Verlaufseigenschaften.

Besonders bevorzugt steht A für 1,2-Ethylen. Diese Amine der Formel (I) ermöglichen einen besonders guten Verlauf, eine besonders gute Entlüftung und eine besonders schnelle Aushärtung.

Z steht bevorzugt für H.

Im Amin der Formel (I) ist Y bevorzugt ausgewählt aus der Gruppe bestehend aus H, Methyl, Ethyl, Propyl, Isopropyl, Butyl, Pentyl, Heptyl, Hept-2-yl, Phenyl, Naphthyl und Cyclohexyl.

Besonders bevorzugt steht Y für Phenyl oder Cyclohexyl, insbesondere für Phenyl. Ein solches Amin der Formel (I) ermöglicht eine besonders schnelle Aushärtung und besonders schöne Oberflächen mit hohem Glanz.

Am meisten bevorzugt ist ein Amin der Formel (I), bei welchem A für 1,2-Ethylen, Z für H und Y für Phenyl steht.

Dieses Amin der Formel (I) ist N-Benzyl-1,2-ethandiamin. Es ermöglicht Carbon Nanotubes enthaltende Epoxidharz-Beschichtungen mit besonders gutem Verlauf und besonders ebenmässigen, gut entlüfteten Oberflächen und ganz besonders schneller Aushärtung.

Ein Amin der Formel (I), bei welchem Z für H steht, kann Anteile an dialkylietem Amin, also dem ensprechenden Amin, bei welchem Z für ---CH₂-Y steht, enthalten. Bevorzugt enthält es höchstens 30 Gewichts-%, besonders bevorzugt höchstens 20 Gewichts-%, insbesondere höchstens 15 Gewichts-%, dialkyliertes Amin. Am meisten bevorzugt wird ein Amin der Formel (I), bei welchem Z für H steht, in einer Reinheit von mindestens 95 Gewichts-% eingesetzt.

Das Amin der Formel (I) ist bevorzugt hergestellt mittels partieller Alkylierung von mindestens einem Amin der Formel H₂N-A-NH₂ mit mindestens einem Alkylierungsmittel.

Bevorzugt ist die Alkylierung eine reduktive Alkylierung, wobei als Alkylierungsmittel ein Aldehyd und Wasserstoff eingesetzt wird.

Bevorzugt wird die reduktive Alkylierung in Anwesenheit eines geeigneten Katalysators durchgeführt. Als Katalysator bevorzugt sind Palladium auf Kohle (Pd/C), Platin auf Kohle (Pt/C), Adams-Katalysator oder Raney-Nickel, insbesondere Palladium auf Kohle oder Raney-Nickel.

Bei Verwendung von molekularem Wasserstoff wird die reduktive Alkylierung bevorzugt in einer Druckapparatur bei einem Wasserstoff-Druck von 5 bis 150 bar, insbesondere 10 bis 100 bar, gearbeitet. Dies kann in einem Batch-Prozess oder bevorzugt in einem kontinuierlichen Prozess erfolgen.

Die reduktive Alkylierung wird bevorzugt bei einer Temperatur im Bereich von 40 bis 120 °C, insbesondere 60 bis 100 °C, durchgeführt.

Im Fall von kleinen flüchtigen Aminen wie insbesondere 1,2-Ethandiamin wird dieses bevorzugt im stöchiometrischen Überschuss gegenüber dem Aldehyd eingesetzt und nach der Alkylierung nicht umgesetztes Amin teilweise oder vollständig aus der Reaktionsmischung entfernt, insbesondere mittels Destillation oder Stripping. Falls gewünscht, kann die Reaktionsmischung anschliessend weiter gereinigt werden, insbesondere indem das erhaltene monoalkylierte Amin der Formel (I), bei welchem Z für H steht, mittels Destillation teilweise oder vollständig vom dialkylierten Amin, bei welchem Z für ---CH₂-Y steht, befreit wird.

Das Amin der Formel (I) kann in freier Form oder als Addukt mit mindestens einem Epoxidharz, insbesondere mindestens einem aromatischen Diepoxid mit einem Epoxid-Equivalentgewicht im Bereich von 110 bis 200 g/mol, bevorzugt 150 bis 200 g/mol, insbesondere einem Bisphenol A-Diglycidylether und/oder Bisphenol F-Diglycidylether, vorhanden sein. Dabei ist das Addukt insbesondere mit einem solchen Aminüberschuss hergestellt, dass pro Epoxidgruppe mindestens 1.3 mol Amin der Formel (I) eingesetzt wurden.

Bevorzugt wird das Amin der Formel (I) in einer solchen Menge verwendet, dass mindestens 5 %, bevorzugt mindestens 10 %, aller in der Epoxidharz-Beschichtung vorhanderen Aminwasserstoffe von Aminen der Formel (I) stammen. Insbesondere stammen 5 bis 70 %, bevorzugt 5 bis 50 %, aller vorhanderen Aminwasserstoffe von Aminen der Formel (I). Dabei werden die Aminwasserstoffe von adduktiertem Amin der Formel (I) ebenfalls mitgerechnet.

Ein weiterer Gegenstand der Erfindung ist eine elektrisch leitende Epoxidharz-Beschichtung aus der beschriebenen Verwendung, umfassend
- mindestens ein Epoxid-Flüssigharz,
- mindestens ein Amin der Formel (I),
- Carbon Nanotubes, und
- mindestens einen weiteren Bestandteil ausgewählt aus der Liste bestehend aus weiteren Aminen, Beschleunigern, Füllstoffen, Verdünnern, oberflächenaktiven Additiven und Stabilisatoren.

Als Epoxid-Flüssigharz geeignet sind insbesondere aromatische Epoxidharze, insbesondere die Glycidylether von:
- Bisphenol A, Bisphenol F oder Bisphenol A/F, wobei A für Aceton und F für Formaldehyd steht, welche als Edukte zur Herstellung dieser Bisphenole dienen. Im Fall von Bisphenol F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzcatechin;
- weiteren Bisphenolen oder Polyphenolen wie Bis(4-hydroxy-3-methylphenyl)-methan, 2,2-Bis(4-hydroxy-3-methylphenyl)propan (Bisphenol C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol B), 3,3-Bis(4-hydroxyphenyl)pentan, 3,4-Bis(4-hydroxyphenyl)hexan, 4,4-Bis(4-hydroxyphenyl)-heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol Z), 1,1-Bis(4-hydroxyphenyl)-3,3,5-trimethylcyclohexan (Bisphenol TMC), 1,1-Bis(4-hydroxyphenyl)-1-phenylethan, 1,4-Bis[2-(4-hydroxyphenyl)-2-propyl]-benzol (Bisphenol P), 1,3-Bis[2-(4-hydroxyphenyl)-2-propyl]benzol (Bisphenol M), 4,4'-Dihydroxydiphenyl (DOD), 4,4'-Dihydroxybenzophenon, Bis(2-hydroxy-naphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Novolaken, welche insbesondere Kondensationsprodukte von Phenol oder Kresolen mit Formaldehyd sind;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin P) oder 4,4'-[1,3-Phenylen-bis(1-methylethyliden)]bisanilin (Bisanilin M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol A-, F- oder A/F-Flüssigharz, beziehungsweise die Glycidylisierungsprodukte von hydriertem Bisphenol A, F oder A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.

Besonders bevorzugt sind bei Raumtemperatur flüssige, aromatische Diepoxide mit einem Epoxid-Equivalentgewicht im Bereich von 110 bis 200 g/mol, bevorzugt 150 bis 200 g/mol, insbesondere Bisphenol A-Diglycidylether und/oder Bisphenol F-Diglycidylether, wie sie kommerziell beispielsweise von Olin, Huntsman oder Momentive erhältlich sind. Diese Flüssigharze ermöglichen eine schnelle Aushärtung und hohe Härten.

Zusammen mit dem Epoxid-Flüssigharz kann die Beschichtung Anteile von Bisphenol A-Festharz oder Novolak-Glycidylethern oder Reaktivverdünnern enthalten.

Geeignete Reaktivverdünner sind insbesondere Butandioldiglycidylether, Hexandioldiglycidylether, Trimethylolpropandi- oder triglycidylether, Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃- bis C₁₅-Alkylglycidylether.

Bevorzugt enthält die Epoxidharz-Beschichtung die bereits genannten Amine der Formel (I) und die bereits genannten Carbon Nanotubes in den bereits genannten Mengen.

Bevorzugt enthält die Epoxidharz-Beschichtung zusätzlich zu mindestens einem Amin der Formel (I) mindestens ein weiteres Amin, insbesondere mindestens ein weiteres Amin mit mindestens vier aliphatischen Aminwasserstoffen. Geeignete Amine mit mindestens vier aliphatischen Aminwasserstoffen sind insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethyl-1,6-hexandiamin (TMD), 1,7-Heptandiamin, 1,8-Octandiamin, 1,9-Nonandiamin, 1,10-Decandiamin, 1,11-Undecandiamin, 1,12-Dodecandiamin, 1-Amino-3-aminomethyl-3,5,5-trimethylcyclohexan (IPDA), 1,2-Diaminocyclohexan, 1,3-Diaminocyclohexan, 1,4-Diaminocyclohexan, 1,3-Bis(aminomethyl)-cyclohexan, 1,4-Bis(aminomethyl)cyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 2(4)-Methyl-1,3-diaminocyclohexan, 2,5(2,6)-Bis(aminomethyl)-bicyclo[2.2.1]heptan (NBDA), 3(4),8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA), 1,4-Bis(aminomethyl)benzol, Bis(2-aminoethyl)ether, 3,6-Dioxaoctan-1,8-diamin, 4,7-Dioxadecan-1,10-diamin, 4,7-Dioxadecan-2,9-diamin, 4,9-Dioxa-dodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydro-furane oder andere Polytetrahydrofurandiamine, Polyoxyalkylendi- oder -triamine, insbesondere Polyoxypropylendiamine oder Polyoxypropylentriamine wie Jeffamine^{®} D-230, Jeffamine^{®} D-400 oder Jeffamine^{®} T-403 (alle von Huntsman), Diethylentriamin (DETA), Triethylentetramin (TETA), Tetraethylenpentamin (TEPA), Pentaethylenhexamin (PEHA), Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin, 3-(2-Aminoethyl)aminopropylamin, Bis(hexamethylen)triamin (BHMT), sowie weiterhin Addukte dieser Amine mit Epoxidharzen.

Bevorzugt ist das weitere Amin ausgewählt aus der Gruppe bestehend aus TMD, IPDA, 1,2-Diaminocyclohexan, 1,3-Diaminocyclohexan, 1,4-Diaminocyclohexan, 1,3-Bis(aminomethyl)cyclohexan, 1,4-Bis(aminomethyl)cyclohexan, Bis(4-aminocyclohexyl)methan, 2(4)-Methyl-1,3-diaminocyclohexan, MXDA, Polyoxypropylendiaminen mit einem mittlerem Molekulargewicht Mₙ im Bereich von 200 bis 500 g/mol, Polyoxypropylentriaminen mit einem mittlerem Molekulargewicht Mₙ im Bereich von 300 bis 500 g/mol, BHMT, DETA, TETA, TEPA, PEHA, DPTA, N3-Amin, N4-Amin, Addukten von IPDA, MXDA, DETA, TETA oder TEPA mit Epoxidharzen, und Mischungen aus zwei oder mehr der genannten Amine.

Besonders bevorzugt sind TMD, IPDA, 1,3-Bis(aminomethyl)cyclohexan, 1,4-Bis-(aminomethyl)cyclohexan, MXDA, Polyoxypropylendiaminen mit einem mittlerem Molekulargewicht Mₙ im Bereich von 200 bis 500 g/mol, Addukten von IPDA und/oder MXDA mit aromatischen Diepoxiden oder Mischungen aus zwei oder mehr der genannten Amine.

Weitere geeignete Amine sind N-Aminoethylpiperazin, 3-Dimethylaminopropylamin (DMAPA), 3-(3-(Dimethylamino)propylamino)propylamin (DMAPAPA), Monoamine, Polyamidoamine, insbesondere Umsetzungsprodukte aus einer ein- oder mehrwertigen Carbonsäure oder deren Ester oder Anhydrid, insbesondere einer Dimerfettsäure, mit einem im stöchiometrischen Überschuss eingesetzten Polyamin, insbesondere DETA oder TETA, Mannich-Basen, insbesondere Phenalkamine, also Umsetzungsprodukte von Phenolen, insbesondere Cardanol, mit Aldehyden, insbesondere Formaldehyd, und Polyaminen, oder aromatische Polyamine wie insbesondere 4,4'-, 2,4' und/oder 2,2'-Diaminodiphenylmethan, 2,4(6)-Toluylendiamin, 3,5-Dimethylthio-2,4(6)-toluylendiamin oder 3,5-Diethyl-2,4(6)-toluylendiamin.

Bevorzugt stammen 5 bis 50 % aller in der Epoxidharz-Beschichtung vorhandenen Aminwasserstoffe von Aminen der Formel (I), und es ist mindestens ein weiteres Amin mit mindestens vier aliphatischen Aminwasserstoffen vorhanden.

Dabei ist das weitere Amin mit mindestens vier aliphatischen Aminwasserstoffen bevorzugt ausgewählt aus der Gruppe bestehend aus TMD, IPDA, 1,3-Bis-(aminomethyl)cyclohexan, MXDA und Polyoxypropylendiaminen mit einem mittlerem Molekulargewicht Mₙ im Bereich von 200 bis 500 g/mol. Besonders bevorzugt ist eine Kombination aus zwei oder mehr dieser weiteren Amine.

Geeignete Beschleuniger sind insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; Nitrate wie insbesondere Calciumnitrat; tertiäre Amine wie insbesondere 1,4-Diazabicyclo[2.2.2]octan, Benzyldimethylamin, α-Methylbenzyldimethylamin, Triethanolamin, Dimethylaminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo[5.4.0]-undec-7-en, Guanidine wie insbesondere 1,1,3,3-Tetramethylguanidin, Phenole, insbesondere Bisphenole, Phenol-Harze oder Mannich-Basen wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen.

Bevorzugt sind Säuren, Nitrate, tertiäre Amine oder Mannich-Basen, insbesondere Salicylsäure, Calciumnitrat oder 2,4,6-Tris(dimethylaminomethyl)phenol, oder eine Kombination dieser Beschleuniger.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsieb, Aluminiumoxid, Zinkoxid, Aluminium-dotiertes Zinkoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln.

Als Füllstoff für eine pigmentierte Epoxidharz-Beschichtung bevorzugt sind Calciumcarbonat, Talk, Quarzmehl, Quarzsand, Dolomit, Wollastonit oder Kaolin, insbesondere Calciumcarbonat, Quarzmehl, Quarzsand oder eine Kombination davon. Solche Füllstoffe sinken aufgrund ihres nicht allzu hohen spezifischen Gewichts bei der Applikation und während der Aushärtung kaum ab, was eine weitgehend homogene ausgehärtete Beschichtung mit besonders gleichmässiger elektrischer Leitfähigkeit ermöglicht.

Als Füllstoff für eine transparente Epoxidharz-Beschichtung bevorzugt ist Zinkoxid, insbesondere Aluminium-dotiertes Zinkoxid, insbesondere in einer geringen Menge im Bereich von 0.5 bis 5 Gewichts-%, bevorzugt 1 bis 3 Gewichts-%, bezogen auf die gesamte Epoxidharz-Beschichtung. Eine solche Menge Zinkoxid kann den leicht dunklen Graustich einer geringen Menge Carbon Nanotubes etwas aufhellen und kompensieren und dabei die gute elektrische Leitfähigkeit erhalten, wodurch eine hohe Transparenz weitgehend ohne Verdunkelung oder Aufhellung des Untergrundes erreicht wird. Eine solche transparente Epoxidharz-Beschichtung ist auch geeignet als transparente Versiegelung auf elektrostatisch ableitfähigen Böden aller Art. Insbesondere ist sie geeignet als transparente Versiegelung von mit elektrisch leitendem Quarzsand abgestreuten Flächen, wobei der Quarzsand und die darunterliegende Beschichtung durch die transparente Versiegelung hindurch gut sichtbar ist. Eine solche Oberfläche ist besonders rutschhemmend und erfüllt hohe ästhetische Ansprüche.

Bevorzugt enthält eine transparente Epoxidharz-Beschichtung weniger als 0.1 Gewichts-% Füllstoffe oder Pigmente verschieden von Carbon Nanotubes und Zinkoxid, insbesondere ist sie frei von solchen Füllstoffen oder Pigmenten.

Geeignete Verdünner sind insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, 2,2,4-Trimethyl-1,3-pentandiolmonoisobutyrat, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol, Cardanol (aus Cashewschalen-Öl, enthaltend 3-(8,11-Pentadecadienyl)phenol), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.

Bevorzugt sind Verdünner mit einem Siedepunkt von mehr als 200 °C. Besonders bevorzugt ist Benzylalkohol.

Bevorzugt enthält die Epoxidharz-Beschichtung einen besonders geringen Gehalt an Verdünnern mit einem Siedepunkt von weniger als 200 °C, insbesondere weniger als 1 Gewichts-%.

Bevorzugt enthält die Epoxidharz-Beschichtung einen geringen Gehalt an Verdünnern mit einem Siedepunkt von mehr als 200 °C, insbesondere weniger als 20 Gewichts-%, bevorzugt weniger als 15 Gewichts-%.

Geeignete oberflächenaktive Additive sind insbesondere Entschäumer, Entlüfter, Netzmittel, Dispergiermittel, Verlaufsmittel oder dispergiertes Paraffinwachs. Bevorzugt enthält die Epoxidharz-Beschichtung eine Kombination solcher Additive.

Geeignete Stabilisatoren sind insbesondere Stabilisatoren gegen UV-Strahlung oder Wärme.

Gegebenenfalls enthält die Epoxidharz-Beschichtung weitere Hilfs- und Zusatzstoffe, insbesondere
- Pigmente, insbesondere Titandioxid, Eisenoxide oder Chrom(III)oxid,
- Mercaptogruppen aufweisende Verbindungen, insbesondere flüssige Mercaptan-terminierte Polysulfidpolymere, Mercaptan-terminierte Polyoxyalkylenether, Mercaptan-terminierte Polyoxyalkylen-Derivate, Polyester von Thiocarbonsäuren, 2,4,6-Trimercapto-1,3,5-triazin, Triethylenglykoldimercaptan oder Ethandithiol,
- weitere Reaktivverdünner, insbesondere epoxidiertes Sojaöl oder Leinöl, Acetoacetatgruppen aufweisende Verbindungen, insbesondere acetoacetylierte Polyole, Butyrolakton, Carbonate, Aldehyde, Isocyanate oder Reaktivgruppen aufweisende Silikone,
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren wie insbesondere Ethylen, Propylen, Butylen, Isobutylen, Isopren, Vinylacetat oder Alkyl(meth)acrylate, oder chlorsulfonierte Polyethylene, Fluorhaltige Polymere oder Sulfonamid-modifizierte Melamine,
- Rheologie-Modifizierer, insbesondere Antiabsetzmittel,
- Haftverbesserer, insbesondere Organoalkoxysilane,
- flammhemmende Substanzen, insbesondere polybromierte Diphenyloxide oder Diphenylether, Phosphate wie insbesondere Diphenylkresylphosphat, Resor-cinol-bis(diphenylphosphat), Resorcinoldiphosphat-Oligomer, Tetraphenylresorcinoldiphosphit, Ethylendiamindiphosphat, Bisphenol-A-bis(diphenylphosphat), Tris(chloroethyl)phosphat, Tris(chloropropyl)phosphat, Tris(dichloroisopropyl)-phosphat, Tris[3-bromo-2,2-bis(bromomethyl)propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicar-boximid), 1,2-Bis(tribromophenoxy)ethan, Tris(2,3-dibromopropyl)isocyanurat, Tribromophenol, Hexabromocyclododecan, Bis(hexachlorocyclopentadieno)-cyclooctan oder Chlorparaffine,
- weitere leitende Substanzen, insbesondere dotierte mineralische Füllstoffe, Metallpulver, Carbonfasern, Russ, Graphit oder ionischen Flüssigkeiten, oder
- weitere Additive, insbesondere Filmbildehilfsmittel oder Biozide.

Die Epoxidharz-Beschichtung umfasst bevorzugt mindestens zwei Komponenten, welche in voneinander getrennten Gebinden gelagert und erst kurz vor der Applikation miteinander vermischt werden.

Die Harz-Komponente enthält mindestens das Epoxid-Flüssigharz und gegebenenfalls weitere Epoxidgruppen-haltige Verbindungen.

Die Härter-Komponente enthält das Amin der Formel (I) und gegebenenfalls weitere mit Epoxidgruppen reaktive Verbindungen.

Die weiteren Inhaltsstoffe, insbesondere die Carbon Nanotubes, können als Bestandteil der Harz- und/oder der Härter-Komponente vorhanden sein. Carbon Nanotubes, welche in einer Epoxidgruppen-haltigen Flüssigkeit dispergiert vorliegen, sind bevorzugt ein Bestandteil der Harz-Komponente.

Bevorzugt ist eine Epoxidharz-Beschichtung umfassend
- eine Harz-Komponente enthaltend mindestens ein Epoxid-Flüssigharz, Carbon Nanotubes, mindestens einen Entschäumer, gegebenenfalls Pigmente und Füllstoffe und gegebenenfalls mindestens einen Verdünner, insbesondere Benzylalkohol, und
- eine Härter-Komponente umfassend mindestens ein Amin der Formel (I), gegebenenfalls weitere Amine, gegebenenfalls mindestens einen Verdünner, insbesondere Benzylalkohol, und gegebenenfalls mindestens einen Beschleuniger.

Bevorzugt ist die Epoxidharz-Beschichtung nicht wasserbasiert und enthält nur einen geringen Gehalt an Wasser, bevorzugt weniger als 5 Gewichts-%, insbesondere weniger als 1 Gewichts-%, Wasser. Eine solche Beschichtung ist besonders robust gegenüber Feuchtigkeit.

Es ist aber auch möglich, dass die Epoxidharz-Beschichtung einen höheren Gehalt an Wasser enthält. Insbesondere können die Harz-Komponente oder die Härter-Komponente oder beide wasserbasiert sein.

Besonders bevorzugt ist eine Epoxidharz-Beschichtung enthaltend
- 0.001 bis 0.05 Gewichts-% Carbon Nanotubes,
- weniger als 1 Gewichts-% Verdünner mit einem Siedepunkt von weniger als 200 °C, und
- weniger als 5 Gewichts-% Wasser
bezogen auf die gesamte Beschichtung.

Eine solche Beschichtung ist gut applizierbar, verursacht kaum Emissionen und ermöglicht Bodenbeschichtungen mit besonders hoher Beständigkeit gegenüber Feuchtigkeit und guter elektrischer Leitfähigkeit.

In einer bevorzugten Ausführungsform ist die Epoxidharz-Beschichtung pigmentiert und enthält bezogen auf die gesamte Beschichtung 20 bis 70 Gewichts-%, insbesondere 30 bis 60 Gewichts-%, Calciumcarbonat, Quarzmehl, Quarzsand oder eine Kombination davon.

Eine solche Beschichtung ermöglicht besonders robuste Bodenbeschichtungen in dekorativen Farben, bei welchen die Füllstoffe während der Applikation und Aushärtung kaum absinken und somit kaum Inhomogenitäten in der Beschichtung verursachen.

In einer weiteren bevorzugten Ausführungsform ist die Epoxidharz-Beschichtung transparent und enthält bezogen auf die gesamte Beschichtung
- 0.001 bis 0.01 Gewichts-% Carbon Nanotubes,
- 1 bis 3 Gewichts-% Zinkoxid, insbesondere Aluminium-dotiertes Zinkoxid, und
- insbesondere weniger als 0.1 Gewichts-% Füllstoffe oder Pigmente verschieden von Carbon Nanotubes und Zinkoxid.

Eine solche Beschichtung ermöglicht eine hohe Transparenz, wobei besonders ästhetische Effekte erzielt werden können, inbesondere in Kombination mit elektrisch leitfähigem dekorativem Quarzsand.

In der Epoxidharz-Beschichtung liegt das Verhältnis der Anzahl von gegenüber Epoxidgruppen reaktiven Gruppen gegenüber der Anzahl Epoxidgruppen bevorzugt im Bereich von 0.5 bis 1.5, insbesondere 0.7 bis 1.2.

Die Harz- und die Härter-Komponente der Epoxidharz-Zusammensetzung werden in voneinander getrennten Gebinden gelagert. Ein geeignetes Gebinde zum Lagern der Harz- oder der Härter-Komponente ist insbesondere ein Eimer, ein Hobbock, ein Fass, ein Beutel oder eine Büchse. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern. Zur Anwendung der Epoxidharz-Beschichtung werden die Komponenten kurz vor oder während der Applikation miteinander vermischt. Das Mischungsverhältnis zwischen der Harz- und der Härter-Komponente wird bevorzugt so gewählt, dass die gegenüber Epoxidgruppen reaktiven Gruppen der Härter-Komponente in einem geeigneten Verhältnis zu den Epoxidgruppen der Harz-Komponente stehen, wie vorgängig beschrieben. In Gewichtsteilen liegt das Mischungsverhältnis zwischen der Harz-Komponente und der Härter-Komponente üblicherweise im Bereich von 1:10 bis 20:1, bevorzugt 1:1 bis 10:1.

Die Vermischung der Komponenten erfolgt mittels eines geeigneten Verfahrens; sie kann kontinuierlich oder batchweise erfolgen. Falls das Vermischen nicht unmittelbar vor der Applikation erfolgt, muss darauf geachtet werden, dass zwischen dem Vermischen der Komponenten und der Applikation nicht zu viel Zeit vergeht und die Applikation innerhalb der Topfzeit erfolgt. Die Vermischung erfolgt insbesondere bei Umgebungstemperatur, welche typischerweise im Bereich von etwa 5 bis 40°C, bevorzugt bei etwa 10 bis 35°C, liegt.

Mit dem Vermischen der beiden Komponenten beginnt die Aushärtung durch chemische Reaktion. Die primären und sekundären Aminogruppen und gegebenenfalls vorhandene weitere gegenüber Epoxidgruppen reaktive Gruppen reagieren mit den Epoxidgruppen unter deren Ringöffnung (Additionsreaktion). Als Ergebnis hauptsächlich dieser Reaktion polymerisiert die Epoxidharz-Beschichtung und härtet dadurch aus.

Die Aushärtung erfolgt bevorzugt bei Umgebungstemperatur und erstreckt sich typischerweise über einige Stunden bis Tage. Die Dauer hängt unter anderem von der Temperatur, der Reaktivität der Bestandteile, deren Stöchiometrie und der Gegenwart von Beschleunigern ab.

Im frisch vermischten Zustand hat die Epoxidharz-Beschichtung eine niedrige Viskosität. Bevorzugt liegt die Viskosität 5 Minuten nach dem Vermischen der Komponenten bei 20 °C im Bereich von 100 bis 4'000 mPa·s, bevorzugt 200 bis bis 3'000 mPa·s, insbesondere 300 bis bis 2'000 mPa·s, gemessen mittels Kegel-Platten Viskosimeter bei einer Schergeschwindigkeit von 10 s⁻¹.

Die Applikation der Epoxidharz-Beschichtung erfolgt auf mindestens ein Substrat, wobei die Folgenden besonders geeignet sind:
- Beton, Mörtel, Zementestrich, Faserzement, Backstein, Ziegel, Gips, Natursteine wie Granit oder Marmor, oder Sand, insbesondere elektrisch leitender Quarzsand;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- beschichtete oder lackierte Substrate, insbesondere lackierte Fliesen, gestrichener Beton, pulverbeschichtete Metalle oder Legierungen;
- Beschichtungen, Farben oder Lacke, insbesondere beschichtete Böden, welche mit einer weiteren Bodenbelagsschicht überschichtet werden.

Die Substrate können bei Bedarf vor dem Applizieren vorbehandelt werden, insbesondere durch physikalische und/oder chemische Reinigungsverfahren oder das Aufbringen eines Aktivators oder eines Primers.

Die frisch vermischte Epoxidharz-Beschichtung wird innerhalb der Topfzeit flächig in einer Schichtdicke von etwa 0.1 bis etwa 5 mm auf ein Substrat appliziert, typischerweise bei Umgebungstemperatur. Die Applikation erfolgt insbesondere durch Aufgiessen auf das zu beschichtende Substrat und anschliessendem gleichmässigem Verteilen mit Hilfe beispielsweise eines Rakels oder Gummischiebers. Die Applikation kann auch mit einem Pinsel oder Roller erfolgen. Bei der Aushärtung entstehen typischerweise homogene, ebenmässige, glänzende, nichtklebrige, pigmentierte oder transparente Filme von hoher Härte und Robustheit, welche eine gute Haftung zu verschiedensten Substraten aufweisen.

Ein weiterer Gegenstand der Erfindung ist die aus der vermischten Epoxidharz-Beschichtung erhaltende ausgehärtete, elektrisch leitende Epoxidharz-Beschichtung.

Die Epoxidharz-Beschichtung verfügt nach der Aushärtung über eine elektrische Leitfähigkeit in einem Bereich, welcher geeignet ist als Bestandteil eines elektrostatisch ableitfähigen Bodensystems.

Insbesondere weist die Epoxidharz-Beschichtung nach der Aushärtung in einer Schichtdicke im Bereich von 0.3 bis 3 mm einen elektrischen Widerstand gegen eine Erdung bestimmt gemäss DIN EN 61340-4-1 im Bereich von > 5·10⁴ Ohm und < 10⁹ Ohm auf.

Für den Fall, dass die ausgehärtete Epoxidharz-Beschichtung transparent ist, weist sie in einer Schichtdicke von 0.5 mm auf Glas bevorzugt eine Absorption bei 665 nm, bestimmt mittels UV-Vis Spektroskopie, von höchstens 0.7, bevorzugt höchstens 0.6, insbesondere höchstens 0.5, auf. Eine solche Beschichtung ist insbesondere auch geeignet als transparente Versiegelung für elektrostatisch ableitfähige Böden, insbesondere auch für mit elektrisch leitendem Quarzsand abgestreute Böden, wobei die Farbe und Struktur des Sandes gut sichtbar bleibt und eine hoch ästhetische Oberfläche erzielt wird.

Die erfindungsgemässe Epoxidharz-Beschichtung wird bevorzugt verwendet als Bestandteil eines elektrostatisch ableitfähigen Bodensystems. Ein solches Bodensystem wird insbesondere verlegt in Produktionshallen oder Räumen, wo unkontrollierte elektrostatische Entladungen problematisch sind. Dies sind insbesondere Räume, wo elektronische Bauteile hergestellt, gelagert oder verwendet werden, oder wo mit hochsensiblen Messsystemen gearbeitet wird, oder wo brennbare Flüssigkeiten oder Sprengstoffe gehandhabt oder gelagert wird, sowie insbesondere klimatisierte Räume mit besonders geringer Luftfeuchtigkeit und besonders wenigen Partikel in der Atmosphäre, wie sogenannte Reinräume, radiologische Einrichtungen oder Operationssäle.

Ein weiterer Gegenstand der Erfindung ist somit ein elektrostatisch ableitfähiges Bodensystem, umfassend von unten nach oben
(i) mindestens ein Substrat,
(ii) gegebenenfalls mindestens eine Epoxidharz-Grundierung,
(iii) mindestens ein an eine Erdung angeschlossenes elektrisches Leitsystem,
(iv) mindestens eine elektrisch leitende Epoxidharz-Beschichtung, wie vorgängig beschrieben,
(v) gegebenenfalls mindestens einen eingestreuten Füllstoff, und
(vi) gegebenenfalls mindestens eine Versiegelung.

Das elektrostatisch ableitfähige Bodensystem weist bevorzugt insgesamt einen elektrischen Widerstand gegen die Erdung bestimmt nach DIN EN 61340-4-1 im Bereich von > 5·10⁴ Ohm und < 10⁹ Ohm auf.

Als Substrat (i) geeignet ist insbesondere Beton, gegebenenfalls vorbehandelt mittels Schleifen, Sandstrahlen oder Kugelstrahlen, oder Mörtel, Zementestrich, Faserzement, Backstein, Ziegel, Gips, Naturstein wie Granit oder Marmor, Asphalt oder eine Reparatur- oder Nivelliermasse auf Basis PCC (Polymer-modifizierter Zementmörtel) oder ECC (Epoxidharz-modifizierter Zementmörtel). Bevorzugt ist Beton, Mörtel oder Zementestrich.

Das Substrat wird bevorzugt mit mindestens einer Epoxidharz-Grundierung (ii) beschichtet. Diese ist bevorzugt niedrigviskos und weitgehend frei von Füllstoffen. Sie dient insbesondere dazu, das Substrat zu verfestigen, allfällige Poren zu verschliessen und eine gute Haftung zwischen dem Substrat und den weiteren Schichten sicherzustellen. Die Grundierung wird typischerweise mit einer Bürste, einer Rolle oder einem Gummischieber auf dem Substrat verteilt. Der Auftrag erfolgt in einer oder mehreren Schichten, typischerweise in einer Menge im Bereich von 0.2 bis 0.5 kg/m². Dafür geeignete, kommerziell erhältliche Produkte sind beispielsweise Sikafloor^{®}-150, Sikafloor^{®}-151, Sikafloor^{®}-160 oder Sikafloor^{®}-161 (alle von Sika).

Falls das Substrat uneben ist, kann nach der Grundierung zum Egalisieren der Oberfläche eine mit Sand verfüllte Epoxidharz-Zusammensetzung aufgespachtelt werden.

Auf das gegebenenfalls grundierte und gegebenenfalls egalisierte Substrat wird ein geerdetes Leitsystem (iii) verlegt. Für die Erdung werden bevorzugt Löcher in den Boden gebohrt und darin metallene, überstehende Schrauben befestigt. An den Schrauben wird bevorzugt ein Netz von Kupferdrähten oder Kupferbändern verlegt, wobei diese mit den Schrauben, beispielsweise über aufgesetzte metallene Unterlagsscheiben, in Kontakt stehen. Das Equipment dafür und eine genaue Beschreibung für das Installieren wird beispielsweise im kommerziell erhältlichen Sikafloor^{®} Leitset (von Sika) zur Verfügung gestellt. Je nach Abstand der Kupferdrähte oder -bänder und der Erdungsschrauben und der Art der Beschichtung (iv) wird zusätzlich ein sogenannter Leitfilm auf diese Installation aufgebracht, welcher die elektrische Leitung zwischen den Kupferdrähten oder - bändern sicherstellt. Als Leitfilm geeignet sind insbesondere hoch leitende Epoxidharz-Beschichtungen, wie beispielsweise Sikafloor^{®}-220 W Conductive (von Sika).

Bevorzugt umfasst das elektrische Leitsystem mindestens einen geerdeten Kupferdraht oder ein geerdetes Kupferband und gegebenenfalls mindestens einen damit in Kontakt stehenden elektrischen Leitfilm mit einem elektrischen Widerstand von < 10⁴ Ohm.

Auf das elektrische Leitsystem wird anschliessend mindestens eine elektrisch leitende Epoxidharz-Beschichtung (iv) enthaltend Carbon Nanotubes und mindestens ein Amin der Formel (I) aufgebracht und ausgehärtet, wie vorgängig beschrieben. Die Epoxidharz-Beschichtung (iv) kann transparent oder pigmentiert sein, wie vorgängig beschrieben. Sie wird in einer oder mehreren Schichten auf das Leitsystem aufgebracht, insbesondere in einer Schichtdicke im Bereich von 0.1 bis 5 mm, bevorzugt 0.2 bis 3 mm. Bevorzugt wird sie in nur einer Schicht in einer Menge im Bereich von 0.2 bis 3 kg/m², bevorzugt 0.3 bis 2.5 kg/m², appliziert.

Die elektrisch leitende Epoxidharz-Beschichtung kann mit einem während der Topfzeit eingestreuten Füllstoff (v) verfüllt werden, wobei als Füllstoff insbesondere Quarzmehl und/oder Quarzsand geeignet sind. Der Füllstoff kann so bemessen sein, dass er mehrheitlich in die Beschichtung einsinkt und die Epoxidharz-Beschichtung verfestigt, oder es kann im Überschuss abgesandet werden, so dass nach der Aushärtung und Entfernung des überschüssigen Sandes eine abgesandete, raue Oberfläche erhalten wird.

Zum Herstellen einer abgesandeten, rauen Oberfläche wird bevorzugt mindestens ein elektrisch leitender Quarzsand eingesetzt.

Als elektrisch leitender Quarzsand geeignet ist insbesondere ein mit einem elektrisch leitenden Kunstharz beschichter Quarzsand, welcher insbesondere eine Korngrösse im Bereich von 0.1 bis 1.3 mm aufweist. Solche Quarzsande sind kommerziell erhältlich, beispielsweise als Granucol^{®} Conduct 2.0 (von Dorfner).

Auf die gegebenenfalls mit Füllstoff abgestreute elektrisch leitende Epoxidharz-Beschichtung wird anschliessend gegebenenfalls mindestens eine Versiegelung (vi) appliziert. Dafür geeignet ist insbesondere eine transparente, elektrisch leitende Epoxidharz-Beschichtung, welche insbesondere Carbon Nanotubes und mindestens ein Amin der Formel (I) enthält, und bevorzugt zusätzlich ein Zinkoxid, insbesondere ein Aluminium-dotiertes Zinkoxid.

Die Versiegelung wird insbesondere in einer Menge im Bereich von 0.1 bis 1 kg/m², bevorzugt 0.2 bis 0.7 kg/m², aufgebracht.

In einer bevorzugten Ausführungsform des Bodensystems ist die elektrisch leitende Epoxidharz-Beschichtung (iv) pigmentiert und weist eine Schichtdicke im Bereich von 0.1 bis 5 mm, insbesondere 0.2 bis 3 mm, auf. In diesem Fall enthält das Bodensystem bevorzugt keinen im Überschuss eingestreuten, auf der Oberfläche verbleibenden Füllstoff und keine Versiegelung. Die pigmentierte Epoxidharz-Beschichtung (iv) bildet also bevorzugt die oberste Schicht des Bodensystems. Dabei ist es besonders wichtig, dass diese Oberfläche gut entlüftet und somit besonders ebenmässig ist, um hohen ästhetischen Ansprüchen zu genügen.

In dieser Ausführungsform ist die elektrische Leitfähigkeit der Epoxidharz-Beschichtung (iv) so zuverlässig und gut, dass beim an eine Erdung angeschlossenen elektrischen Leitsystem (iii) auf den sogenannten Leitfilm, wie beispielsweise Sikafloor^{®}-220 W Conductive (von Sika), verzichtet werden kann. Dies bedeutet, dass ein ganzer Arbeitsgang inklusive der Wartezeit für die Aushärtung des Leitfilms wegfällt, was besonders vorteilhaft ist.

In dieser Ausführungsform wird die pigmentierte elektrisch leitende Epoxidharz-Beschichtung (iv) bevorzugt direkt auf mindestens einen geerdeten Kupferdraht oder mindestens ein geerdetes Kupferband appliziert, und es ist kein elektrischer Leitfilm dazwischen.

In einer weiteren bevorzugten Ausführungsform der Erfindung ist die elektrisch leitende Epoxidharz-Beschichtung (iv) im Überschuss mit elektrisch leitendem Quarzsand abgestreut und mit einer transparenten Versiegelung überschichtet. Dabei ist die Epoxidharz-Beschichtung (iv) bevorzugt in einer Schichtdicke im Bereich von 0.3 bis 1 mm vorhanden. Sie ist bevorzuzgt transparent und enthält bevorzugt ein Zinkoxid, insbesondere ein Aluminium-dotiertes Zinkoxid. Die transparente Versiegelung ist bevorzugt ebenfalls eine elektrisch leitende Epoxidharz-Beschichtung und enthält bevorzugt Carbon Nanotubes und mindestens ein Zinkoxid.

Das erfindungsgemässe Bodensystem ist bevorzugt Bestandteil eines Gebäudes oder eines Raums in einem Gebäude. Insbesondere ist das Bodensystem überall dort vorhanden, wo unkontrollierte Entladungen Schäden verursachen können. Dies sind insbesondere Räume, wo elektronische Bauteile hergestellt, gelagert oder verwendet werden, oder wo mit hochsensiblen Messsystemen gearbeitet wird, oder wo brennbare Flüssigkeiten oder Sprengstoffe gehandhabt oder gelagert werden, sowie insbesondere klimatisierte Räume mit besonders geringer Luftfeuchtigkeit und besonders wenigen Partikel in der Atmosphäre, wie sogenannte Reinräume, radiologische Einrichtungen oder Operationssäle.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Verwendete Substanzen und Abkürzungen:

- CNT Dispersion 10%:: Dispersion von 10 Gewichts-% single wall carbon nanotubes in Alkylglycidylether, EEW 266 g/mol (Tuball^{®} Matrix Beta 207, von OCSiAl)
- Araldite^{®} GY 250:: Bisphenol A-Diglycidylether, EEW 187 g/mol (von Huntsman)
- Araldite^{®} DY-P:: p-tert.Butylphenylglycidylether, EEW 225 g/mol (von Huntsman)
- Araldite^{®} DY-H:: Hexandioldiglycidylether, EEW 147 g/mol (von Huntsman)
- Kreide: Omyacarb^{®} 10 GU (von Omya)
- Al-dotiertes ZnO: Aluminium-dotiertes Zinkoxid (ZnO-23K, von Itochu)
- B-EDA: N-Benzyl-1,2-ethandiamin, AHEW 50.1 g/eq, hergestellt wie nachfolgend beschrieben
- IPDA: 1-Amino-3-aminomethyl-3,5,5-trimethylcyclohexan, AHEW 42.6 g/eq (Vestamin^{®} IPD, von Evonik)
- MXDA: 1,3-Bis(aminomethyl)benzol, AHEW 34 g/Eq (von Mitsubishi Gas Chemical)
- TMD: 2,2(4),4-Trimethylhexamethylendiamin, AHEW 39.6 g/Eq (Vestamin^{®} TMD, von Evonik)
- D-230: Polyoxypropylendiamin, mittleres Molekulargewicht 230 g/mol, AHEW60 g/mol (Jeffamine^{®} D-230, von Huntsman)
- Addukt-A1: Addukt aus IPDA, MXDA und Araldite^{®} GY 250 in Benzylalkohol, AHEW 231 g/eq, hergestellt wie nachfolgend beschrieben
- Addukt-B1: Addukt aus B-EDA und Araldite^{®} GY 250, AHEW 116.3 g/eq, hergestellt wie nachfolgend beschrieben
- Ancamine^{®} K54: 2,4,6-Tris(dimethylaminomethyl)phenol (von Air Products)
- Sikafloor^{®}-150:: 2-komponentige Epoxidharz-Grundierung (von Sika)
- Sikafloor^{®}-151:: 2-komponentige Epoxidharz-Grundierung (von Sika)
- Sikafloor^{®}-220 W Conductive:: 2-komponentige, wasserbasierte, elektrisch hoch leitende, schwarze Epoxidharz-Beschichtung
- leitender Quarzsand:: mit Kunstharz beschichteter, elektrisch leitender Quarzsand 0.3 bis 0.8 mm (Granucol^{®} Conduct 2.0, von Dorfner)

### N-Benzyl-1,2-ethandiamin (B-EDA):

180.3 g (3 mol) 1,2-Ethandiamin wurden bei Raumtemperatur vorgelegt, mit einer Lösung aus 106.0 g (1 mol) Benzaldehyd in 1200 ml Isopropanol vermischt und 2 Stunden gerührt, anschliessend bei 80°C, 80 bar Wasserstoff-Druck und einem Fluss von 5 ml/min auf einer kontinuierlich arbeitenden Hydrierapparatur mit Pd/C-Festbettkatalysator hydriert und die hydrierte Lösung am Rotationsverdampfer bei 65 °C eingeengt, wobei unreagiertes 1,2-Ethandiamin, Wasser und Isopropanol entfernt wurden. Die so erhaltene Reaktionsmischung wurde bei 80°C unter Vakuum mittels Destillation gereinigt. Erhalten wurde eine farblose Flüssigkeit mit einem mittels GC bestimmten Gehalt an N-Benzyl-1,2-ethandiamin von > 97%.

### Addukt-A1:

57.3 g IPDA, 42.5 g MXDA und 318.8 g Benzylalkohol wurden auf 80 °C erwärmt und unter gutem Rühren langsam 81.3 g Araldite^{®} GY 250 zugegeben, wobei die Temperatur der Reaktionsmischung zwischen 70 und 90 °C gehalten wurde. Es wurde eine klare, leicht gelbliche Flüssigkeit mit einer Viskosität bei 20 °C von 45 mPa·s erhalten erhalten.

### Addukt-B1:

55.0 g N-Benzyl-1,2-ethandiamin (B-EDA) wurden auf 80 °C erwärmt und unter gutem Rühren langsam 45.0 g Araldite^{®} GY 250 zugegeben, wobei die Temperatur der Reaktionsmischung zwischen 70 und 90 °C gehalten wurde. Es wurde eine klare, leicht gelbliche Flüssigkeit mit einer Viskosität bei 20 °C von 262 Pa·s erhalten.

Die Viskosität der Addukte wurde wie für das Beispiel 1 beschrieben bestimmt.

### Herstellung von elektrisch leitenden Epoxidharz-Beschichtungen:

### Beispiele 1 bis 3 (pigmentierte Beschichtung in hellgrau):

Für diese Beispiele wurde eine Harz-Komponente hergestellt, indem die folgenden Inhaltsstoffe mittels eines Zentrifugalmischers (SpeedMixer^{™} DAC 150, FlackTek Inc.) vermischt und unter Ausschluss von Feuchtigkeit aufbewahrt wurden:
125.9 Gewichtsteile Araldite^{®} GY 250,
25.2 Gewichtsteile Araldite^{®} DY-P,
11.5 Gewichtsteile Araldite^{®} DY-H,
0.27 Gewichtsteile CNT Dispersion 10%,
231.0 Gewichtsteile Kreide,
12.7 Gewichtsteile Benzylalkohol,
5.6 Gewichtsteile Additive/Entschäumer,
45.8 Gewichtsteile Pigmentpaste hellgrau.

Für jedes Beispiel wurden die in der Tabelle 1 angegebenen Inhaltsstoffe der Härter-Komponente in den angegebenen Mengen (in Gewichtsteilen) mittels des Zentrifugalmischers vermischt und unter Ausschluss von Feuchtigkeit aufbewahrt.

Anschliessend wurden die beiden Komponenten mittels des Zentrifugalmischers zu einer homogenen Flüssigkeit verarbeitet und diese unverzüglich folgendermassen geprüft:
Die **Viskosität** wurde 5 min nach dem Vermischen der Harz- und der Härter-Komponente mittels Kegel-Platten Viskosimeter bei einer Schergeschwindigkeit von 10 s⁻¹ und einer Temperatur von 20 °C gemessen.
Die **Gelierzeit** wurde bestimmt, indem eine frisch vermischte Menge von ca. 3 g im Normklima mit einem Spatel in regelmässigen Abständen bewegt wurde, bis die Masse gelierte.
Die **Shore D** Härte wurde bestimmt nach DIN 53505 an zwei zylindrischen Prüfkörpern (Durchmesser 20 mm, Dicke 5 mm), wobei einer im Normklima und einer bei 8°C und 80% relativer Feuchtigkeit gelagert wurde. Dabei wurde die Härte jeweils nach 1 Tag, 2 Tagen und 7 Tagen gemessen.

Eine Spanplatte wurde mit 0.3 kg/m² Sikafloor^{®}-150 grundiert, 24 h im Normklima aufbewahrt, anschliessend 0.1 kg/m² Sikafloor^{®}-220 W Conductive appliziert und die Platte weitere 24 h im Normklima aufbewahrt. Auf die so beschichtete Platte wurden 1.3 kg/m² der jeweiligen Epoxidharz-Beschichtung_aufgetragen, mit einem Rakel verteilt und zur Entlüftung im noch flüssigen Zustand mit einer Stachelwalze nachgerollt. Dabei wurde der **Verlauf** und die **Entlüftung** beobachtet. Als "sehr gut" wurde der Verlauf bezeichnet, wenn sich die flüssige Beschichtung nach wenigen Strichen des Rakels schnell ausnivellierte und schön in die Ecken verlief. Als "ok" wurde der Verlauf bezeichnet, wenn die flüssige Beschichtung zum Verteilen deutlich mehr Striche des Rakels benötigte, bis in die Ecken verteilt werden musste und sich dann langsam ausnivellierte. Als "gut" oder "sehr gut" wurde die Entlüftung bezeichnet, wenn sich die fein verteilte Luft beim Rollen mit der Stachelwalze zu grösseren Bläschen verband, diese auf der Oberfläche zuverlässig aufplatzten und nach dem Rollen mit der Stachelwalze fast keine oder gar keine weiteren Bläschen mehr aufstiegen. Als "unvollständig" wurde die Entlüftung bezeichnet, wenn auch nach dem Rollen mit der Stachelwalze weitere fein verteilte Luft aufstieg, an der Oberfläche der aushärtenden und somit höherviskos werdenden und schliesslich gelierenden Beschichtung verblieb und so eine leicht unruhige, nicht ganz ebenmässige Oberfläche entstand.

Der **Aspekt** wurde an der beschichteten Spanplatte nach einer Aushärtezeit von 7 Tagen beurteilt. Als "schön" wurde eine glänzende, nichtklebrige Oberfläche ohne Schlieren oder Trübungen bezeichnet. Als "ebenmässig" wurde eine glatte Oberfläche ohne Unebenheiten oder Krater bezeichnet.

Der elektrische **Widerstand** wurde an der beschichteten Spanplatte von Beispiel 1 nach einer Aushärtezeit von 7 Tagen im Normklima gegen die Erde gemäss DIN EN 61340-4-1 an 8 Punkten gemessen.

Die Resultate sind in Tabelle 1 angegeben.

Die mit "(Ref.)" bezeichneten Beispiele sind Vergleichsbeispiele.

**Tabelle 1: Zusammensetzung und Eigenschaften der Beispiele 1 bis 3. "n.b." steht für "nicht bestimmt"**

| **Beispiel** | | **1** | **2** | **3 (Ref.)** |
|---|---|---|---|---|
| **Harz-Komponente:** | | 458.0 | 458.0 | 458.0 |
| **Härter-Komponente:** | | | | |
| B-EDA | | 6.0 | 12.6 | - |
| IPDA | | 15.6 | 10.0 | 20.7 |
| MXDA | | 9.1 | 9.1 | 9.1 |
| Addukt-A1 | | 57.3 | 57.3 | 57.3 |
| Benzylalkohol | | 7.7 | 7.7 | 7.7 |
| Ancamine^{®} K54 | | 8.0 | 8.0 | 8.0 |
| Viskosität (5') [Pa·s] | | 1.5 | 1.4 | 1.8 |
| Gelierzeit [h:min] | | 2:35 | 2:25 | 2:45 |
| Shore D | (1d NK) | 52 | 54 | 65 |
| | (2d NK) | 70 | 62 | 72 |
| | (7d NK) | 72 | 75 | 76 |
| Shore D | (1d 8°/80%) | 31 | 31 | 26 |
| | (2d 8°/80%) | 61 | 62 | 61 |
| | (7d 8°/80%) | 73 | 74 | 73 |
| Verlauf | | sehr gut | sehr gut | ok |
| Entlüftung | | gut | sehr gut | unvollständig |
| Aspekt | | schön, ebenmässig | schön, ebenmässig | schön, etwas uneben |
| Widerstand [Ohm] | | | | |
| | Mittelwert: | 1.1·10⁶ | n.b. | n.b. |
| | Minimalwert: | 2.4·10⁵ | | |
| | Maximalwert: | 2.1·10⁶ | | |

### Beispiele 4 und 5 (transparente Beschichtung oder Versiegelung):

Für diese Beispiele wurde eine Harz-Komponente hergestellt, indem die folgenden Inhaltsstoffe mittels des Zentrifugalmischers vermischt und unter Ausschluss von Feuchtigkeit aufbewahrt wurden:
185.6 Gewichtsteile Araldite^{®} GY 250,
0.04 Gewichtsteile CNT Dispersion 10%,
4.2 Gewichtsteile Al-dotiertes ZnO,
4.8 Gewichtsteile Additive/Entschäumer
15.4 Gewichtsteile Benzylalkohol.

Für jedes Beispiel wurden die in der Tabelle 2 angegebenen Inhaltsstoffe der Härter-Komponente in den angegebenen Mengen (in Gewichtsteilen) mittels des Zentrifugalmischers vermischt und unter Ausschluss von Feuchtigkeit aufbewahrt.

Anschliessend wurden die beiden Komponenten mittels des Zentrifugalmischers zu einer homogenen Flüssigkeit verarbeitet und diese folgendermassen geprüft: Viskosität, Gelierzeit und Shore D wurden wie für das Beispiel 1 beschrieben geprüft.

Eine Spanplatte wurde mit 0.3 kg/m² Sikafloor^{®}-150 grundiert, 24 h im Normklima aufbewahrt, anschliessend 0.1 kg/m² Sikafloor^{®}-220 W Conductive appliziert und die Platte weitere 24 h im Normklima aufbewahrt. Auf die so beschichtete Platte wurden 0.5 kg/m² des jeweiligen Beispiels aufgetragen, mit einem Rakel verteilt und im noch flüssigen Zustand mit einer Nylonwalze nachgerollt. Dabei wurden der **Verlauf** und die **Entlüftung** wie für das Beispiel 1 beschrieben beurteilt.

Zur Beurteilung der **Transparenz** wurde ein Film in einer Schichtdicke von 500 µm auf eine Glasplatte aufgezogen und während 7 Tagen im Normklima gelagert. Anschliessend wurde die Glasplatte auf eine bedruckte Zeitung gelegt und beurteilt, wie gut die Schrift der Zeitung durch die beschichtete Glasplatte hindurch sichtbar war. Als "hoch" wurde die Transparenz bezeichnet, wenn die Schrift klar und scharf sichtbar war. Als "mittel" wurde die Transparenz bezeichnet, wenn die Schrift gut, aber unscharf sichtbar war.

Als Mass für die Transparenz wurde weiterhin die **Absorption** mittels UV-Vis Spektroskopie bestimmt. Dazu wurde an der zur Beurteilung der Transparenz beschichteten Glasplatte in einem UV-Vis Gerät (Cary 60 von Agilent Technologies) die Absorption bei 665 nm (rot) bestimmt.

Der **Aspekt** und der elektrische **Widerstand** wurden an der beschichteten Spanplatte wie für das Beispiel 1 beschrieben bestimmt.

Die Resultate sind in Tabelle 2 angegeben.

Die mit "(Ref.)" bezeichneten Beispiele sind Vergleichsbeispiele.

**Tabelle 2: Zusammensetzung und Eigenschaften der Beispiele 4 und 5**

| **Beispiel** | | **4** | **5 (Ref.)** |
|---|---|---|---|
| **Harz-Komponente:** | | 210.0 | 210.0 |
| **Härter-Komponente:** | | | |
| B-EDA | | 4.3 | - |
| Addukt-B1 | | 2.9 | - |
| IPDA | | 22.3 | 27.0 |
| TMD | | 7.7 | 7.7 |
| D-230 | | 10.3 | 10.3 |
| Benzylalkohol | | 24.0 | 24.0 |
| Viskosität (5') [Pa·s] | | 0.82 | 0.84 |
| Gelierzeit [h:min] | | 2:30 | 2:40 |
| Shore D | (1d NK) | 73 | 72 |
| | (2d NK) | 79 | 78 |
| | (7d NK) | 79 | 79 |
| Shore D | (1d 8°/80%) | 12 | 8 |
| | (2d 8°/80%) | 64 | 64 |
| | (7d 8°/80%) | 79 | 73 |
| Verlauf | | sehr gut | sehr gut |
| Entlüftung | | sehr gut | sehr gut |
| Aspekt | | schön, ebenmässig, | schön, ebenmässig |
| Transparenz | | hoch | mittel |
| Absorption bei 665 nm | | 0.45 | 0.51 |
| Widerstand [Ohm] | | | |
| | Mittelwert: | 1.5·10⁷ | n.b. |
| | Minimalwert: | 3.0·10⁶ | |
| | Maximalwert: | 3.3·10⁸ | |

### Herstellung von elektrostatisch ableitfähigen Bodensystemen:

### Beispiel 6:

Eine Fläche von 55 m² geschliffenem Betonboden im Innenbereich wurde mit einem elektrostatisch ableitfähigen Bodensystem versehen. Während dem Einbau herrschte eine Lufttemperatur von 25 bis 30 °C und eine Luftfeuchtigkeit von 35 bis 40 %.

Zuerst wurde eine Schicht Sikafloor^{®}-151 als Grundierung in einer Menge von 0.4 kg/m² aufgerollt und während 24 h aushärten gelassen.

Anschliessend wurden auf dem so vorbereiteten Boden Erdungspunkte und Kupferbänder aus einem Sikafloor^{®} Leitset gemäss Anleitung eingebaut.

Dann wurden 2.0 kg/m² der elektrisch leitenden Epoxidharz-Beschichtung aus **Beispiel 1** appliziert, mittels Gummischieber verteilt und mit einer Stachelwalze nachgerollt. Die Epoxidharz-Beschichtung zeigte einen ausgezeichneten Verlauf und eine seht gute Entlüftung. Die erhaltene grau pigmentierte Oberfläche war ebenmässig, hart, glänzend, klebfrei und frei von Schlieren oder Trübungen.

Der elektrische Widerstand des fertigen Bodensystems gegen die Erdung wurde an 30 Punkten gemäss DIN EN 61340-4-1 gemessen. Der Bereich der gemessenen Werte ist in Tabelle 3 angegeben.

### Beispiel 7:

Eine Fläche von 55 m² geschliffenem Betonboden im Innenbereich wurde mit einem elektrostatisch ableitfähigen Bodensystem versehen. Während dem Einbau herrschte eine Untergrundtemperatur von 14 bis 17 °C, eine Lufttemperatur von 13 bis 19 °C und eine Luftfeuchtigkeit von 49 bis 66 %.

Zuerst wurde eine Schicht Sikafloor^{®}-151 als Grundierung in einer Menge von 0.4 kg/m² aufgerollt und während 24 h aushärten gelassen.

Anschliessend wurden auf dem so vorbereiteten Boden Erdungspunkte und Kupferbänder aus einem Sikafloor^{®} Leitset gemäss Anleitung eingebaut, gefolgt von der Beschichtung Sikafloor^{®}-220 W Conductive, welche in einer Menge von 0.1 kg/m² als Leitfilm aufgerollt wurde.

Nach 24 h Aushärtezeit wurden 0.5 kg/m² der transparenten, elektrisch leitenden Epoxidharz-Beschichtung aus **Beispiel 4** appliziert. Dazu wurde das Material aufgegossen, mit einem Gummischieber verteilt und mit einer Rolle nachgerollt. Diese Schicht wurde innerhalb von 30 min nach der Applikation im Überschuss mit 3 kg/m² leitendem Quarzsand abgestreut. Nach einer Aushärtezeit von 24 h wurde der überschüssige Sand mittels Besen und Staubsauger entfernt.

Die abgesandete Fläche wurde anschliessend mit der elektrisch leitenden Epoxidharz-Beschichtung aus **Beispiel 4** transparent versiegelt, indem diese in einer Menge von 0.4 kg/m² mittels Gummischieber verteilt und anschliessend mittels einer Strukturwalze nachgerollt wurde.

Die Versiegelung liess sich auf der abgesandeten Fläche gut verteilen und zeigte nach dem Nachrollen eine ebenmässige Oberfläche ohne Streifen, Blasen, Krater oder sonstigen Inhomogenitäten. Nach der Aushärtung wies das Bodensystem eine hoch ästhetische, ebenmässige, leicht grau schimmernde, harte, klebfreie, transparente Oberfläche auf, durch welche die Farbe des Sandes gut sichtbar war.

Der elektrische Widerstand des fertigen Bodensystems gegen die Erdung wurde an 30 Punkten gemäss DIN EN 61340-4-1 gemessen. Der Bereich der gemessenen Werte ist in Tabelle 3 angegeben.

**Tabelle 3: Aufbau und elektrischer Widerstand der Beispiele 6 und 7**

| **Beispiel** | **6** | **7** |
|---|---|---|
| Substrat: | geschliffener Beton | |
| Grundierung: | Sikafloor^{®}-151 | Sikafloor^{®}-151 |
| Leitsystem: | Sikafloor^{®} Leitset | Sikafloor^{®} Leitset und Sikafloor^{®}-220 W Conductive |
| Epoxidharz-Beschichtung: | pigmentierte Beschichtung aus **Beispiel 1** | transparente Beschichtung aus **Beispiel 4** |
| abgestreut mit: | - | leitender Quarzsand |
| Versiegelung: | - | transparente Beschichtung aus **Beispiel 4** |
| Widerstand gegen die Erdung: [Ohm] | 7.9·10⁶ bis 1.2·10⁷ | 1.2·10⁵ bis 2.4·10⁵ |

## Patentansprüche

1. Verwendung einer Kombination von Carbon Nanotubes und mindestens einem Amin der Formel (I),
Z-NH-A-NH-CH₂-Y (I)
wobei
A für einen zweiwertigen C₂ bis C₁₅ Alkylen-, Cycloalkylen- oder Arylalkylen-Rest, welcher gegebenenfalls ein oder mehrere Stickstoffatome oder Ethergruppen enthält, steht, und
Z für H oder ---CH₂-Y steht, und
Y für H oder einen C₁ bis C₁₂ Alkyl-, Cycloalkyl-, Arylalkyl- oder Aryl-Rest steht,
wobei das Amin der Formel (I) insgesamt mindestens 8 C-Atome enthält, zur Herstellung einer elektrisch leitenden Epoxidharz-Beschichtung.

2. Verwendung gemäss Anspruch 1, **dadurch gekennzeichnet, dass** die Carbon Nanotubes in einer Menge im Bereich von 0.001 bis 0.1 Gewichts-%, insbesondere 0.001 bis 0.05 Gewichts-%, bezogen auf die gesamte Epoxidharz-Beschichtung vorhanden sind.

3. Verwendung gemäss einem der Ansprüche 1 oder 2, **dadurch gekennzeichnet, dass** A für 1,2-Ethylen, Z für H und Y für Phenyl stehen.

4. Verwendung gemäss einem der Ansprüche 1 bis 3, **dadurch gekennzeichnet, dass** das Amin der Formel (I) in einer solchen Menge verwendet wird, dass mindestens 5 % aller in der Epoxidharz-Beschichtung vorhanderen Aminwasserstoffe von Aminen der Formel (I) stammen.

5. Elektrisch leitende Epoxidharz-Beschichtung aus der Verwendung gemäss einem der Ansprüche 1 bis 4, umfassend
- mindestens ein Epoxid-Flüssigharz,
- mindestens ein Amin der Formel (I),
- Carbon Nanotubes, und
- mindestens einen weiteren Bestandteil ausgewählt aus der Liste bestehend aus weiteren Aminen, Beschleunigern, Füllstoffen, Verdünnern, oberflächenaktiven Additiven und Stabilisatoren.

6. Epoxidharz-Beschichtung gemäss Anspruch 5, **dadurch gekennzeichnet, dass** 5 bis 50 % aller vorhandenen Aminwasserstoffe von Aminen der Formel (I) stammen und mindestens ein weiteres Amin mit mindestens vier aliphatischen Aminwasserstoffen vorhanden ist.

7. Epoxidharz-Beschichtung gemäss einem der Ansprüche 5 oder 6, **dadurch gekennzeichnet, dass** sie weniger als 5 Gewichts-% Wasser bezogen auf die gesamte Beschichtung enthält.

8. Epoxidharz-Beschichtung gemäss einem der Ansprüche 5 bis 7, **dadurch gekennzeichnet, dass** sie
- 0.001 bis 0.05 Gewichts-% Carbon Nanotubes,
- weniger als 1 Gewichts-% Verdünner mit einem Siedepunkt von weniger als 200 °C, und
- weniger als 5 Gewichts-% Wasser
bezogen auf die gesamte Beschichtung enthält.

9. Epoxidharz-Beschichtung gemäss einem der Ansprüche 5 bis 8, **dadurch gekennzeichnet, dass** sie pigmentiert ist und bezogen auf die gesamte Beschichtung 20 bis 70 Gewichts-% Calciumcarbonat, Quarzmehl, Quarzsand oder eine Kombination davon enthält.

10. Epoxidharz-Beschichtung gemäss einem der Ansprüche 5 bis 8, **dadurch gekennzeichnet, dass** sie transparent ist und
- 0.001 bis 0.01 Gewichts-% Carbon Nanotubes,
- 1 bis 3 Gewichts-% Zinkoxid, insbesondere Aluminium-dotiertes Zinkoxid, und
- insbesondere weniger als 0.1 Gewichts-% Füllstoffe oder Pigmente verschieden von Carbon Nanotubes und Zinkoxid
bezogen auf die gesamte Beschichtung enthält.

11. Ausgehärtete, elektrisch leitende Epoxidharz-Beschichtung erhalten aus der vermischten Epoxidharz-Beschichtung gemäss einem der Ansprüche 5 bis 10.

12. Elektrostatisch ableitfähiges Bodensystem umfassend von unten nach oben
(i) mindestens ein Substrat,
(ii) gegebenenfalls mindestens eine Epoxidharz-Grundierung,
(iii) mindestens ein an eine Erdung angeschlossenes elektrisches Leitsystem,
(iv) mindestens eine elektrisch leitende Epoxidharz-Beschichtung gemäss Anspruch 11,
(v) gegebenenfalls mindestens einen eingestreuten Füllstoff, und
(vi) gegebenenfalls mindestens eine Versiegelung.

13. Bodensystem gemäss Anspruch 12, **dadurch gekennzeichnet, dass** der elektrische Widerstand gegen die Erdung bestimmt nach DIN EN 61340-4-1 im Bereich von > 5·10⁴ Ohm und < 10⁹ Ohm liegt.

14. Bodensystem gemäss einem der Ansprüche 12 oder 13, **dadurch gekennzeichnet, dass** das elektrische Leitsystem mindestens einen geerdeten Kupferdraht oder ein geerdetes Kupferband und gegebenenfalls mindestens einen damit in Kontakt stehenden elektrischen Leitfilm mit einem elektrischen Widerstand von < 10⁴ Ohm umfasst.

15. Bodensystem gemäss einem der Ansprüche 12 bis 14, **dadurch gekennzeichnet, dass** die elektrisch leitende Epoxidharz-Beschichtung pigmentiert ist und eine Schichtdicke im Bereich von 0.1 bis 5 mm, insbesondere 0.2 bis 3 mm, aufweist.

16. Bodensystem gemäss Anspruch 15, **dadurch gekennzeichnet, dass** die elektrisch leitende Epoxidharz-Beschichtung direkt auf mindestens einen geerdeten Kupferdraht oder mindestens ein geerdetes Kupferband appliziert wird und kein elektrischer Leitfilm dazwischen ist.

17. Bodensystem gemäss einem der Ansprüche 12 bis 14, **dadurch gekennzeichnet, dass** die elektrisch leitende Epoxidharz-Beschichtung im Überschuss mit elektrisch leitendem Quarzsand abgestreut ist und mit einer transparenten Versiegelung überschichtet ist.

## Claims

1. Use of a combination of carbon nanotubes and at least one amine of the formula (I)
Z-NH-A-NH-CH₂-Y (I)
where
A is a divalent C₂ to C₁₅ alkylene, cycloalkylene or arylalkylene radical optionally containing one or more nitrogen atoms or ether groups, and
Z is H or ---CH₂-Y, and
Y is H or a C₁ to C₁₂ alkyl, cycloalkyl, arylalkyl or aryl radical,
where the amine of the formula (I) contains a total of at least 8 carbon atoms,
for production of an electrically conductive epoxy resin coating.

2. Use according to Claim 1, **characterized in that** the carbon nanotubes are present in an amount in the range from 0.001% to 0.1% by weight, especially 0.001% to 0.05% by weight, based on the overall epoxy resin coating.

3. Use according to either of Claims 1 and 2, **characterized in that** A is 1,2-ethylene, Z is H and Y is phenyl.

4. Use according to any of Claims 1 to 3, **characterized in that** the amine of the formula (I) is present in such an amount that at least 5% of all amine hydrogens present in the epoxy resin coating come from amines of the formula (I).

5. Electrically conductive epoxy resin coating obtained from the use according to any of Claims 1 to 4, comprising
- at least one liquid epoxy resin,
- at least one amine of the formula (I),
- carbon nanotubes, and
- at least one further constituent selected from the list consisting of further amines, accelerators, fillers, thinners, surface-active additives and stabilizers.

6. Epoxy resin coating according to Claim 5, **characterized in that** 5% to 50% of all amine hydrogens present come from amines of the formula (I) and at least one further amine having at least four aliphatic amine hydrogens is present.

7. Epoxy resin coating according to either of Claims 5 and 6, **characterized in that** it contains less than 5% by weight of water based on the overall coating.

8. Epoxy resin coating according to any of Claims 5 to 7, **characterized in that** it contains
- 0.001% to 0.05% by weight of carbon nanotubes,
- less than 1% by weight of thinner having a boiling point of less than 200°C, and
- less than 5% by weight of water,
based on the overall coating.

9. Epoxy resin coating according to any of Claims 5 to 8, **characterized in that** it has been pigmented and, based on the overall coating, contains 20% to 70% by weight of calcium carbonate, ground quartz, quartz sand or a combination thereof.

10. Epoxy resin coating according to any of Claims 5 to 8, **characterized in that** it is transparent and contains
- 0.001% to 0.01% by weight of carbon nanotubes,
- 1% to 3% by weight of zinc oxide, especially aluminium-doped zinc oxide, and
- especially less than 0.1% by weight of fillers or pigments other than carbon nanotubes and zinc oxide, based on the overall coating.

11. Cured electrically conductive epoxy resin coating obtained from the mixed epoxy resin coating according to any of Claims 5 to 10.

12. Electrostatically dissipative floor system comprising, from the bottom upward,
(i) at least one substrate,
(ii) optionally at least one epoxy resin primer,
(iii) at least one grounded electrical conductor system,
(iv) at least one electrically conductive epoxy resin coating according to Claim 11,
(v) optionally at least one distributed filler, and
(vi) optionally at least one seal.

13. Floor system according to Claim 12, **characterized in that** electrical resistance to ground, determined to DIN EN 61340-4-1, is in the range of > 5·10⁴ ohms and < 10⁹ ohms.

14. Floor system according to either of Claims 12 and 13, **characterized in that** the electrical conduction system comprises at least a grounded copper wire or a grounded copper ribbon and optionally at least one electrically conductive foil which is in contact therewith and has an electrical resistance of < 10⁴ ohms.

15. Floor system according to any of Claims 12 to 14, **characterized in that** the electrically conductive epoxy resin coating has been pigmented and has a layer thickness in the range from 0.1 to 5 mm, especially 0.2 to 3 mm.

16. Floor system according to Claim 15, **characterized in that** the electrically conductive epoxy resin coating is applied directly to at least one grounded copper wire or at least one grounded copper ribbon and there is no electrically conductive foil in between.

17. Floor system according to any of Claims 12 to 14, **characterized in that** an excess of electrically conductive quartz sand is scattered over the electrically conductive epoxy resin coating and covered with a transparent seal.

## Revendications

1. Utilisation d'une combinaison de nanotubes de carbone et d'au moins une amine de formule (I),
Z-NH-A-NH-CH₂-Y (I)
dans laquelle
A représente un radical divalent alkylène, cycloalkylène ou arylalkylène en C₂ à C₁₅, contenant éventuellement un ou plusieurs atomes d'azote ou groupes éthers, et
Z représente H ou ---CH₂-Y, et
Y représente H ou un radical alkyle, cycloalkyle, arylalkyle ou aryle en C₁ à C₁₂,
l'amine de formule (I) contenant au total au moins 8 atomes C, pour la préparation d'un revêtement de résine époxyde électriquement conducteur.

2. Utilisation selon la revendication 1, **caractérisée en ce que** les nanotubes de carbone sont présents en une quantité dans la plage de 0,001 à 0,1 % en poids, notamment 0,001 à 0,05 % en poids, par rapport à la totalité du revêtement de résine époxyde.

3. Utilisation selon l'une quelconque des revendications 1 ou 2, **caractérisée en ce que** A représente 1,2-éthylène, Z représente H et Y représente phényle.

4. Utilisation selon l'une quelconque des revendications 1 à 3, **caractérisée en ce que** l'amine de formule (I) est utilisée en une quantité telle qu'au moins 5 % de tous les hydrogènes d'amine présents dans le revêtement de résine époxyde proviennent d'amines de formule (I).

5. Revêtement de résine époxyde électriquement conducteur de l'utilisation selon l'une quelconque des revendications 1 à 4, comprenant
- au moins une résine époxyde liquide,
- au moins une amine de formule (I),
- des nanotubes de carbone, et
- au moins un autre constituant choisi dans la liste constituée d'autres amines, d'accélérateurs, de charges, de diluants, d'additifs tensioactifs et de stabilisateurs.

6. Revêtement de résine époxyde selon la revendication 5, **caractérisé en ce que** 5 à 50 % de tous les hydrogènes d'amine présents proviennent d'amines de formule (I) et au moins une autre amine comprenant au moins quatre hydrogènes d'amine aliphatiques est présente.

7. Revêtement de résine époxyde selon l'une quelconque des revendications 5 ou 6, **caractérisé en ce qu'**il contient moins de 5 % en poids d'eau par rapport à la totalité du revêtement.

8. Revêtement de résine époxyde selon l'une quelconque des revendications 5 à 7, **caractérisé en ce qu'**il contient
- 0,001 à 0,05 % en poids de nanotubes de carbone,
- moins de 1 % en poids de diluant ayant un point d'ébullition inférieur à 200 °C, et
- moins de 5 % en poids d'eau
par rapport à la totalité du revêtement.

9. Revêtement de résine époxyde selon l'une quelconque des revendications 5 à 8, **caractérisé en ce qu'**il est pigmenté et contient, par rapport à la totalité du revêtement, de 20 à 70 % en poids de carbonate de calcium, de poudre de quartz, de sable de quartz ou d'une combinaison de ceux-ci.

10. Revêtement de résine époxyde selon l'une quelconque des revendications 5 à 8, **caractérisé en ce qu'**il est transparent, et contient
- 0,001 à 0,01 % en poids de nanotubes de carbone,
- 1 à 3 % en poids d'oxyde de zinc, notamment d'oxyde de zinc dopé à l'aluminium, et
- notamment moins de 0,1 % en poids de charges ou de pigments autres que des nanotubes de carbone et de l'oxyde de zinc
par rapport à la totalité du revêtement.

11. Revêtement de résine époxyde électriquement conducteur durci obtenu à partir du revêtement de résine époxyde mélangé selon l'une quelconque des revendications 5 à 10.

12. Système de sol à dissipation électrostatique comprenant de bas en haut
(i) au moins un substrat,
(ii) éventuellement, au moins une couche d'apprêt à base de résine époxyde,
(iii) au moins un système de conduction électrique raccordé à une mise à la terre,
(iv) au moins un revêtement de résine époxyde électriquement conducteur selon la revendication 11,
(v) éventuellement au moins une charge dispersée, et
(vi) éventuellement, au moins un scellement.

13. Système de sol selon la revendication 12, **caractérisé en ce que** la résistance électrique à la mise à la terre déterminée selon la norme DIN EN 61340-4-1 se situe dans la plage de > 5·10⁴ ohms et < 10⁹ ohms.

14. Système de sol selon l'une quelconque des revendications 12 ou 13, **caractérisé en ce que** le système de conduction électrique comprend au moins un fil de cuivre mis à la terre ou une bande de cuivre mise à la terre et, éventuellement, au moins un film conducteur électrique en contact avec celui-ci ou celle-ci, ayant une résistance électrique < 10⁴ ohms.

15. Système de sol selon l'une quelconque des revendications 12 à 14, **caractérisé en ce que** le revêtement de résine époxyde électriquement conducteur est pigmenté et présente une épaisseur de couche dans la plage de 0,1 à 5 mm, notamment 0,2 à 3 mm.

16. Système de sol selon la revendication 15, **caractérisé en ce que** le revêtement de résine époxyde électriquement conducteur est appliqué directement sur au moins un fil de cuivre mis à la terre ou au moins une bande de cuivre mise à la terre et il n'y a pas de film conducteur électrique entre eux.

17. Système de sol selon l'une quelconque des revendications 12 à 14, **caractérisé en ce que** le revêtement de résine époxyde électriquement conducteur est saupoudré en excès avec du sable de quartz électriquement conducteur et est recouvert d'un scellement transparent.
